# EUROPEAN PATENT SPECIFICATION

(11) **EP 0 438 722 B1**
(45) Date of publication and mention of the grant of the patent: **08.03.1995**
(21) Application number: 90124379.0
(22) Date of filing: 17.12.1990
(51) Int. Cl.: B01D 61/00, B01D 53/22

(54) **Dynamic membrane separation process for improved selectivity**
Trennungsverfahren mittels einer dynamischen Membran für eine verbesserte Selektivität
Procédé de séparation par membrane dynamique pour une sélectivité améliorée

(30) Priority: 22.12.1989 US 455471
(43) Date of publication of application: 31.07.1991
(73) Proprietor: THE DOW CHEMICAL COMPANY, Midland Michigan 48640-1967 (US)
(72) Inventor: LaPack, Mark A., Midland, Michigan 48640 (US); Dupuis, P. Foppe, Midland, Michigan 40640 (US); Bredeweg, Robert A., Midland, Michigan 48640 (US)
(74) Representative: Sternagel, Hans-Günther, Dr.

(56) References cited:
- US-A- 4 349 356

## Description

Permeation of one component of a multi-component fluid feed mixture through a semipermeable membrane is related to the solubility coefficient, which describes the ability of the membrane to extract that component from the feed mixture, and the diffusion coefficient, which describes how fast that component will transport across the thickness of the membrane. These coefficients are constant for a given mixture/membrane system at a given temperature.

Semipermeable membranes are used in a variety of ways to separate a component of interest from a multi-component feed mixture. For example, in applications where a multi-component feed mixture has a permeable component, that component is separated from the feed mixture by exposing the feed mixture to a semipermeable membrane. Since only the one component is permeable, that component is separated from the feed mixture and it is collected from the other side of the membrane. In a separation process of this type, recovery of the permeating component or the permeate in any given time period is maximized by operation of the membrane separation process at steady state permeation. Steady state permeation means that the rate of permeation of the permeating component essentially does not change with time. In addition, during steady state permeation the total throughput of the permeating component is maximized.

When a multi-component feed mixture having more than one membrane-permeable component is introduced to one side of a semipermeable membrane, the resulting permeate will consist of all the membrane-permeable components from the multi-component feed mixture. Under steady state conditions, maximum throughput of the permeable components will be realized and the proportion of each of those components in the permeate will be directly proportional to the rate of steady state permeation of each component. That is, when a multi-component feed which has two permeable components is introduced to one side of a semipermeable membrane, the two permeable components are separated from the nonpermeable components of the feed mixture. The relative proportions of each of those two components in the permeate, when the system is operated at steady-state, is dependent upon the rate of steady-state permeation of each component.

Presently known semipermeable membrane separation processes do not provide relative separation of individual permeable components vis-a-vis one another apart from the separation which occurs due to the differences in the rates of steady state permeation of the components.

It is often times desirable to provide a greater degree of separation of two or more permeable components relative to one another than is currently possible using known steady state semipermeable membrane permeation. This need arises in both chemical analysis and other contexts. For example, in mass spectrometry, it is desirable to minimize the signal of an interfering component relative to a component of interest, i.e., the analyte. This is possible by maximizing the proportion of the analyte relative to the interferent in the permeate from a semipermeable membrane. Additionally, in purification processes, it is often the case that two or more components in a multi-component fluid mixture are permeable and need to be separated from one another. US-A-4,349,356 describes a process for concentrating a component of a gaseous mixture by providing a pulse to one surface of a porous membrane. By utilizing this transient state before attaining a steady state in a Knudsen diffusion process, the gas diffusing out of the opposite surface of the membrane is highly enriched in the lighter compound, i.e. an enrichment in the order of molecular weights can be attained. This process, however, is limited to the separation of gaseous compounds.

It is the object of the present invention to provide a sorption/desorption membrane separation process which can be used for liquid or gaseous multi-component fluid mixtures and allows the greater degree of separation of two or more permeable components relative to another than is currently possible using known steady-state membrane permeation.

This object is attained by a membrane separation process in which a membrane having a first side and a second side is used to separate components in a multi-component fluid feed mixture wherein a first component of said feed mixture approaches steady-state permeation of said membrane at a faster rate than a second component of said mixture, by the steps of:
(a) introducing said feed mixture to said first side of said membrane for a first predetermined period wherein that said first and second components begin to approach their steady-state permeation of said membrane,
(b) discontinuing the introduction of feed mixture after the first predetermined period has elapsed,
(c) collecting from said second side of said membrane for a second predetermined period of time a new mixture enriched in said first component relative to said feed mixutre, the second predetermined period of time beginning and elapsing before said second component attains steady-state permeation of said membrane,
characterized by using
a semi-permeable membrane sorbing the feed mixture during the first predetermined period and desorbing the new mixture enriched in said first component during the second predetermined period during collecting step (c).

The process of this invention is equally well suited to multi-component fluid feed mixtures that are liquid or gaseous.

According to the invention, one embodiment of a semipermeable membrane separation process is operated under non-steady state or dynamic conditions to provide increased selectivity in separating permeable components relative to one another. The process, by operating under non-steady state conditions, takes advantage of the differential in the rates of attainment of steady-state permeation of permeable compounds. The difference in the rates of attaining steady-state permeation and fall-off from steady-state permeation by permeating compounds is based in large part upon the differences in the diffusion rates of the permeating compounds in the membrane.

When a feed stream containing two permeable components or compounds is exposed to a semipermeable membrane, the permeation of each compound increases from an initial base line value to its steady-state value. This initial region of a permeation response curve is termed sorption. The term desorption, which is the sorption process reversed, is where the introduction of the feed to the membrane is discontinued and the permeation response curve falls off from its steady-state value to a base line value. During the sorption process, compounds which have a faster rate of attainment of steady-state permeation, i.e., faster diffusing compounds, are enriched in the permeate over slower diffusing compounds, relative to the enrichment that is possible under steady-state conditions. Likewise, compounds which have a slower rate of attainment of steady-state permeation and therefore a slower rate of fall-off from steady-state permeation, i.e., slower diffusing compounds, are enriched in the permeate over faster diffusing compounds during the desorption process.

Sorption and desorption, by their nature, represent dynamic, non-steady state conditions. For this reason, neither sorption nor desorption can be maintained indefinitely. Thus, for the enhanced separation of membrane-permeable components from a feed stream relative to one another, a continuous process requires a discontinuous feed stream.

In a process exploiting sorption, the feed stream is preferably interrupted after sufficient time has elapsed for one or more faster diffusing permeable components to approach or reach steady-state permeation of the membrane, but prior to a slower diffusing compound or compounds reaching steady-state permeation of the membrane. The permeate is collected during the period of sorption, and, in this manner, the differential in the rates of attainment of steady-state permeation of the permeable compounds is exploited to produce a permeate enriched in a faster diffusing compound.

In a process exploiting desorption, the permeate is collected beginning at a time when the feed stream, which is at or near steady-state permeation or at some non-baseline permeation, has been interrupted to thereby exploit the differential in the fall-off rates from steady-state permeation to a base line value of the permeable compounds.
The permeate collected is enriched in the slower diffusing compounds.

In one preferred form or the process of the present invention, a multi-component fluid mixture feed having at least two permeable components, wherein a first component approaches steady-state permeation or a membrane at a faster rate than a second component, is introduced to a first side of a semipermeable membrane for a predetermined period of time to selectively separate the first component from the second component. The predetermined time period is preferably less than that required for the second component to reach steady-state permeation of the membrane since that results in the greatest degree of enrichment of the first component. After the predetermined time period has elapsed, the introduction of feed to the first side of the membrane is discontinued or interrupted. The permeate enriched in the faster diffusing component is collected from the second side of the membrane while the feed is in contact with the membrane. It will be appreciated that the introduction and interruption of the feed, as described, can be continuously cycled to produce any desired amount of permeate. Alternatively, the process can be run as a batch process, i.e., only one feed introduction/interruption cycle.

In a continuous process, the multi-component feed is introduced to the first side of a semipermeable membrane and intermittently interrupted at selected time intervals such that the entire feed mixture never reaches steady-state permeation of the membrane. An enriched permeate stream is collected from the second side of the membrane during the time intervals when the feed is in contact with the membrane. Thus, virtually any desired amount of permeate can be collected. Where a batch process is employed, the introduction of the multi-component feed is discontinued after the predetermined time period has elapsed and an enriched permeate stream is collected. This type of process is suitable in certain chemical analysis contexts where a relative small permeate sample is all that is required.

Both the continuous and batch embodiments of the process of the present invention are suited to exploit the sorption and/or desorption portions of the permeation response profile for the feed mixture. That is, the permeate can be collected during sorption to obtain a mixture enriched in the faster diffusing compound or compounds or the permeate can be collected during desorption to obtain a mixture enriched in the slower diffusing compound or compounds.

Intermittent interruption of the feed stream is accomplished in one of several preferred manners. In one embodiment, an inert gas is introduced into the feed stream at selected time intervals to interrupt and "segment" the feed into discrete amounts so as to control and maintain the residence time of each "segment" of feed in contact with the membrane to the preselected time, which time is less than that required for the second permeable component to reach steady-state permeation. In another preferred embodiment, the feed stream is interrupted intermittently and "segmented" by the introduction of an inert liquid at selected time intervals so as to control and maintain the residence time of each "segment" of feed in contact with the membrane to the preselected time, as stated above. In an additional preferred embodiment, the feed is intermittently interrupted and "segmented" physically by a solid barrier or surface, such as a piston, which alternately covers and uncovers the first surface of the membrane, to control and maintain the residence time of each "segment" of feed with respect to the membrane. In another preferred embodiment, the feed stream flow to the membrane is discontinued and the membrane is evacuated with a vacuum after a preselected time, and thereafter the feed is reintroduced to the membrane and the process is repeated. Thus, by employing any one of the above-described means for periodically interrupting and segmenting the feed mixture and choosing the appropriate time interval for the feed to be in contact with the membrane, the permeation process continuously cycles through the sorption-desorption sequence and a permeate enriched in a faster diffusing compound is collected.
Fig. 1 shows a typical permeation response profile for a permeable compound;
Fig. 2 shows a typical permeation response profile for a two-component mixture;
Fig. 3A is a schematic of one embodiment of the apparatus of the present invention;
Fig. 3B is a schematic or the apparatus of Fig. 3A in an alternative operative condition;
Fig. 4 shows a typical permeant collect profile representative of one embodiment of the process of the present invention;
Fig. 5 is a cross-section of an apparatus useful in the present invention;
Fig. 6 shows the normalized permeation response curve for a chloroform-acetone mixture; and
Fig. 7 shows the relative enrichment curve for the chloroform-acetone mixture corresponding to Fig. 6.

The present invention resides in a membrane separation process in which a semipermeable membrane having a first side and a second side is used to separate components in a multi-component fluid feed mixture wherein a first component of said feed mixture approaches steady-state permeation of said membrane at a faster rate than a second component of said mixture, comprising the steps of: (a) introducing said feed mixture to said first side of said membrane so that said first and second components begin to approach their steady-state permeation of said membrane; and (b) collecting from said second side of said membrane for a predetermined period of time a new mixture enriched in said first component relative to said feed mixture, the predetermined period of time beginning before said second component attains steady-state permeation of said membrane. The present invention is applicable to large scale use in the chemical process industry, to chemical analysis systems and to many other situation. In its various embodiments, the process of the present invention can be used to purify a feed stream which contains an undesirable component that is membrane permeable or to produce a permeate that is enriched in either a faster or slower diffusing component or components, as desired. The membrane of the present invention must be a semipermeable membrane having two sides such as a tubular type membrane or a sheet type membrane, such as a tube or sheet made from Nafion brand ionomer or a tube or sheet made from silicone rubber.

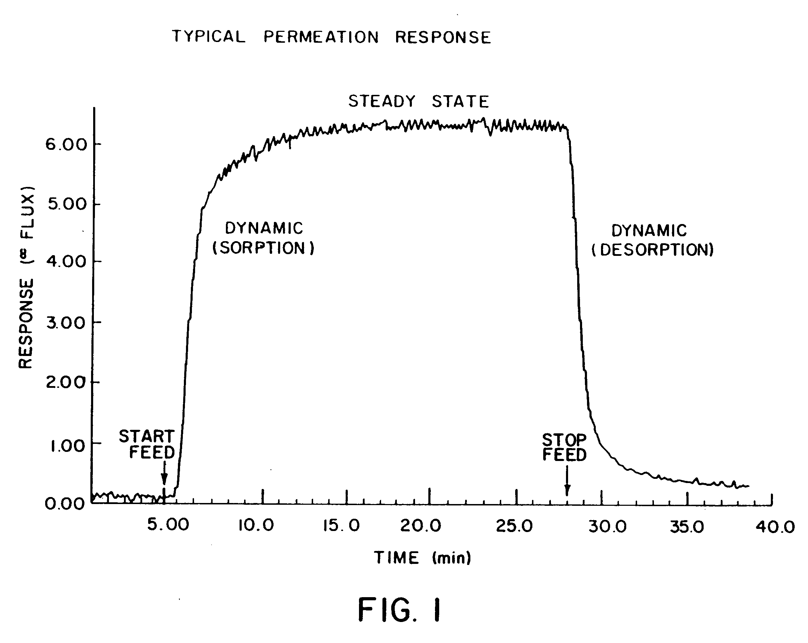

Fig. 1 shows a typical permeation response profile for a permeable compound with the regions of permeation labeled sorption, steady-state and desorption. As is depicted in Fig. 1, permeation of a permeable compound through a membrane increases from a baseline value to steady-state during an initial time period after the feed is introduced to the semipermeable membrane. This is sorption and represents a period of dynamic permeation since the rate of permeation is not constant with time. Similarly, the desorption section of the response profile shows a decrease in permeation or a falling off from its steady-state value to a baseline value after introduction of feed to the membrane has been stopped. This period of desorption also represents a period of dynamic permeation.

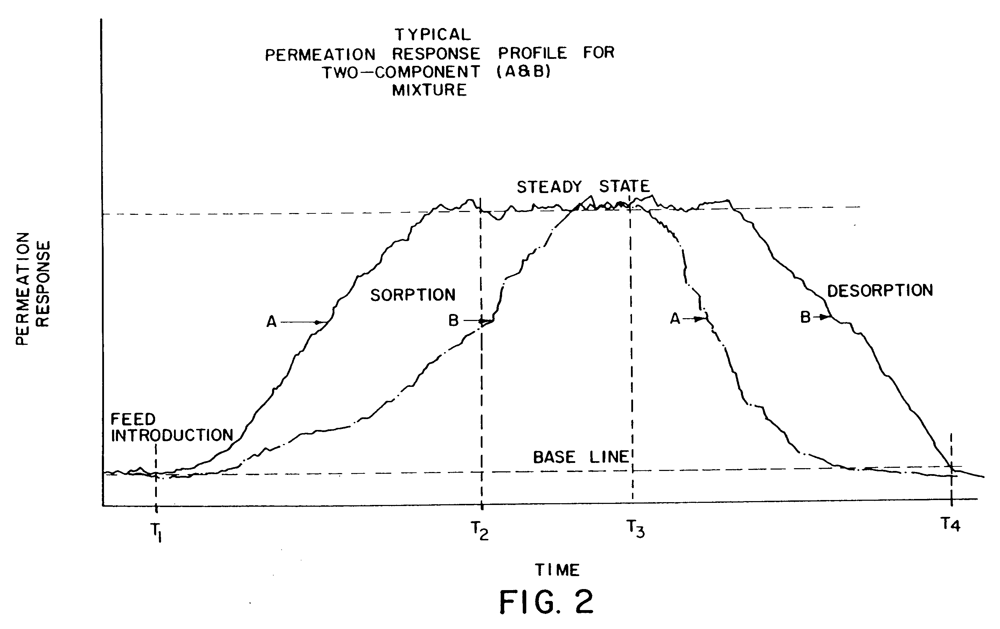

Fig. 2 shows a typical permeation response profile for a two component mixture consisting of component A and component B, both of which are membrane permeable. As shown, component A has a faster rate of attainment of steady-state permeation than does component B and component A has a faster rate of fall-off from steady-state permeation than does component B. The process of the present invention is based on the exploitation of these rate differentials.

In one embodiment, the process of the present invention exploits the differential in the rates of attainment of steady-state permeation (sorption) of permeable components by continuously cycling through a feed introduction/feed interruption regime. That is, a multi-component fluid mixture having at least two permeable components is fed to a first side of a semipermeable membrane and has a preselected residence time in contact therewith which is of sufficient duration so that the compound(s) having a faster rate of attainment of steady-state permeation approach or reach steady-state and the compound(s) having a slower rate of attainment of steady-state permeation do not reach steady-state permeation of the membrane.

With reference to Fig. 2, for example, the feed is introduced to the membrane at a time (T₁) and is interrupted at a time (T₃), with the time period (T₃-T₁) being the preselected time period in which the feed mixture is in contact with the membrane. After the predetermined time period has elapsed, and the introduction of the feed to the membrane has been interrupted, the membrane is purged of the feed mixture. During the time period (T₂-T₁), permeate selectively enriched in component A is collected from the second side of the semipermeable membrane. The exact value of T₂ depends on the specific application and generally is set between T₁ and the attainment of steady state. In some applications it will be desirable to begin to collect the permeate some time after T₁. Once the membrane has been purged after T₄, the feed mixture is again introduced to the membrane and the cycle is repeated.

In another embodiment, the process of the present invention exploits the differential in the rates of fall-off from steady-state permeation to the base line value (desorption) of membrane permeable components. In this embodiment, the permeate stream is enriched in the slower diffusing compound(s), i.e., the compound(s) with the slower rate of fall-off from steady-state permeation. For example, with reference to Fig. 2, the permeate collected during the time interval (T₄-T₃) will be enriched in component B. Thus, depending on which is the desired component, A or B, the permeate is collected during the appropriate time interval (T₂-T₁) for component A and (T₄-T₃) for component B. The exact value of T₃ depends on the specific application and generally is set between the attainment of steady state and T₄.

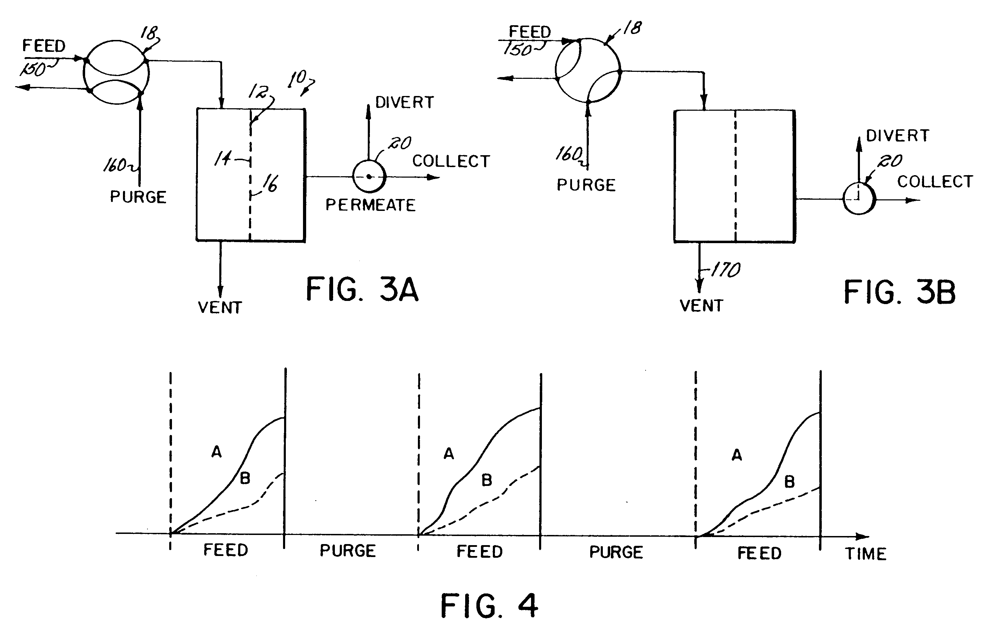

Figs. 3A and 3B depict one embodiment of a single-module dynamic permeation membrane apparatus which is used to carry out the process of this invention. The apparatus comprises a membrane module 10 (Fig. 3A) having a semipermeable membrane 12 positioned therein. A feed stream 150 of a multi-component fluid mixture having at least two permeable components therein, where a first permeable component has a faster rate of attainment of steady-state permeation and a faster rate of fall-off from steady-state permeation than does a second permeable component, analogous to the A-B mixture represented in Fig. 2, is introduced through switching valve 18 to a first side 14 of membrane 12. The enriched permeate stream is collected from a second side 16 of semipermeable membrane 12 through divert valve 20 while the feed stream is in contact with membrane 12.

After a predetermined time period has elapsed, which time period is less than that required for the second permeable component to reach steady-state permeation of membrane 12, for example time period (T₂-T₁) shown in Fig. 2, switching valve 18 is repositioned (Fig. 3B) so that introduction of the feed stream 150 to membrane module 10 is interrupted. A purge stream 160 is introduced to membrane module 10 to purge the module and return the membrane to its prefeed introduction state. When switching, valve 18 is switched to introduce the purge stream to membrane module 10, divert valve 20 is switched (Fig. 3B) so that the fluid from the second side 16 of membrane 12 is diverted, and not collected. The purge stream 160 is preferably an inert liquid or gas. Alternatively, once the feed is interrupted, module 10 may be purged by evacuating any residual fluid with a vacuum pump (not shown).

In addition, membrane module 10 may have a vent 170, shown in Fig. 3B, so that during the purging operation, any fluid which does not permeate the membrane 12 is vented from the module prior to switching of switching valve 18 and reintroduction of the feed stream to membrane module 10.

Continuous cycling of a feed mixture and a purge stream produces a permeate collect profile which is depicted in Fig. 4. The profile shows a repeating sorption section of a permeation curve for a permeate having two components, A and B, wherein the vertical solid lines represent the point in time when switching valve 18 is switched to discontinue introduction of the feed to membrane module 10 and begin introduction of the purge stream to membrane module 10. The vertical dotted lines represent the point in time when switching valve 18 is returned to its original position to begin the introduction of the feed stream and discontinue the introduction of the purge stream. The continuous cycle represented in Fig. 4 produces a sorption permeate enriched in component A relative to component B. When switching valve 18 is in position to introduce feed to module 10, divert valve 20 is in position to collect the permeate enriched in component A, and when switching valve 18 is in position to introduce the purge stream to module 10, divert valve 20 is in position to divert the resulting permeate fluid.

The desorption permeate may be collected using the single-module device depicted in Figs. 3A and 3B by simply reversing the divert valve sequence. That is, while the feed is being introduced to module 10 through switching valve 18, divert valve 20 is in the divert position. Switching valve 18 is then repositioned to a feed interrupt position (not shown) and divert valve 20 is set in the collect position to collect the desorption permeate enriched in component B. Thereafter, switching valve 18 is positioned to introduce the purge stream to membrane module 10 and divert valve 20 is reset to the divert position.

In either embodiment, collecting the sorption or desorption permeate, divert valve 20 may be used to regulate the point in time when collection of the permeate begins and ends. Thus, with reference to Fig. 2, it will be appreciated that the time period when collection of the permeate occurs can be adjusted to collect a permeate with optimum enrichment of the desired component(s).

An alternate desorption technique that has some advantages is to desorb from the first side of the membrane. Referring to Fig. 3B, the purge fluid 160 can be used to remove the feed mixture from the first side of the membrane and then the desorption products from the first side of the membrane can be collected via the vent 170. It is often preferable, in this alternative, to physically cover the other side of the membrane or expose it to a fluid that similarly blocks the membrane surface. However, the desorption products can be collected through both the valve 20 and the vent 170. One advantage of desorbing from the first side of the membrane is that the concentration gradient of a component of the feed mixture is highest on the first side of the membrane.

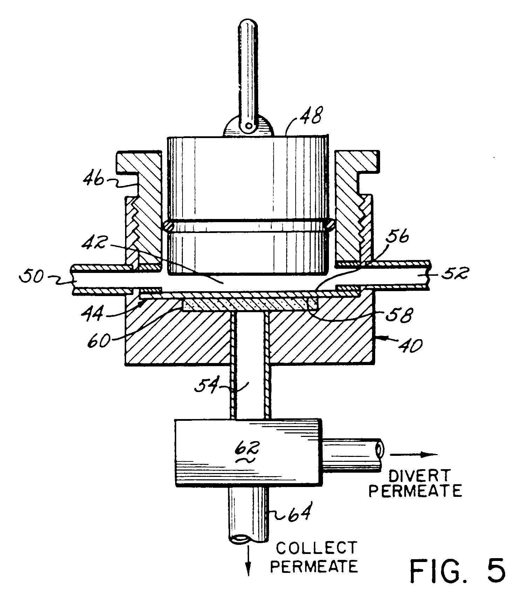

An alternative embodiment of an apparatus useful in the present invention is shown in Fig. 5. The apparatus includes a block 40 having a cavity 42 therein for receiving a membrane 44, cylinder 46, and a piston 48. Cavity 42 is in fluid communication with the exterior of block 40 through a first conduit 50, a second conduit 52 and a third conduit 54. The membrane 44, which is permeable to at least first and second components of a multi-component fluid mixture feed, is positioned in cavity 42 such that its first side 56 is exposed to piston 48 and is in communication with the first and second conduits, 50 and 52, respectively. The second side 58 of membrane 44 is in communication with the third conduit 54, separating it from conduits 50, 52. The membrane 44 may be separated from conduit 54 by a porous frit 60 which supports the membrane 44 to prevent it from being damaged or distorted by the flow of feed or the action of piston 48.

A multi-component fluid mixture feed having at least first and second permeable components is introduced to the first side 56 of the membrane 44 through the first conduit 50. After the preselected time period has elapsed, which time period is less than that required for a second permeable component to reach steady-state permeation of the membrane 44, the piston 48 is actuated in a downward motion to cover the first side 67 of membrane 44 and thereby interrupt the introduction of feed to membrane 44. The apparatus additionally includes a valve member 62 which can be switched from a first position, wherein the permeate from the second side 58 of membrane 44 is collected, to a divert or discard position wherein the fluid permeating membrane 44 is diverted away from the primary collection line 64. This diverted fluid may be recycled to the membrane separation apparatus or transported by suitable means to a second stage separation module (not shown). By alternatingly covering and uncovering membrane 44 with piston 48, the cyclic dynamic permeation process of this invention is achieved.

In the use of the apparatus shown in Fig. 5, the feed may be continuously introduced through the conduit 50, with the piston 48 and the cylinder 46 dimensioned such that when the piston 48 is in the down position the feed passes around piston 48 and out of block 40 through the conduit 52. Alternatively, a preselected amount of feed may be introduced into the block 40 in a batch-wise manner and the piston 48 alternatingly raised and lowered to cover and uncover the membrane 44. In either case, and especially when the feed is a gas, the conduit 52 may be operably connected to a vacuum pump (not shown).

The dynamic membrane permeation apparatus shown in Fig. 5 was evaluated for its ability to exploit the dynamic permeation characteristics of a two-component mixture. A feed mixture of chloroform and acetone, both of which are membrane permeable, was used to evaluate the device.

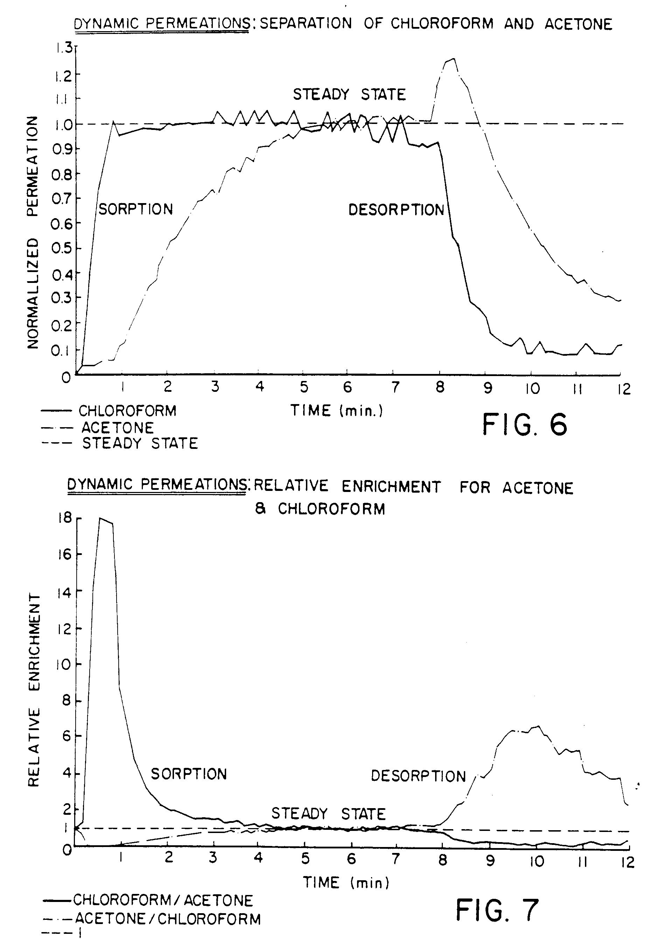

Fig. 6 shows the permeation data collected for the dynamic separation of chloroform and acetone using the device of Fig. 5. Acetone, being the slower diffusing compound, has a slower rate of attainment of steady-state permeation than does chloroform. Thus, in the sorption segment of the permeation profile, chloroform is significantly enriched in the permeate relative to its enrichment during steady-state permeation. During the desorption segment of the permeation profile, acetone is enriched over chloroform relative steady-state enrichment due to the fact that acetone has a slower rate of fall-off from steady-state permeation.

The relative enrichment of acetone and chloroform is shown in Fig. 7. This curve is normalized so that enrichment at steady-state permeation is represented by the dotted line at a ratio of 1:1. Thus, as can be seen in Fig. 7, the permeate is significantly enriched in chloroform during the sorption segment of the permeation cycle and the permeate is enriched in acetone during the desorption segment of the permeation cycle. Therefore, with appropriate valving, a permeate stream enriched in the desired component is collected. That is, with reference to the chloroform-acetone example, the permeate collected during sorption is enriched in chloroform and the permeate collected during desorption is enriched in acetone.

It will be appreciated that in certain applications, e.g., purification processes, the permeate is enriched in a component that is undesirable in the feed mixture. In those instances, the enriched permeate collected from the second side of a permeable membrane is discarded and the component remaining in the membrane (depleted or purified of the undesirable component is collected.

The process of the present invention is particularly beneficial and useful for producing a permeate for chemical analysis using mass spectrometry. The reason for this is that the dynamic permeation separation process produces a permeate which is selectively enriched in one permeable component vis-a-vis another permeable component from a multi-component feed mixture, and thereby serves to reduce the interference signal when the permeate is analyzed. For mass spectrometric applications, it is desirable to interface the apparatus for introducing the enriched permeate directly to the mass spectrometer.

## Claims

1. A membrane separation process in which a membrane having a first side and a second side is used to separate components in a multi-component fluid feed mixture wherein a first component of said feed mixture approaches steady-state permeation of said membrane at a faster rate than a second component of said mixture, by the steps of:
(a) introducing said feed mixture to said first side of said membrane for a first predetermined period wherein that said first and second components begin to approach their steady-state permeation of said membrane,
(b) discontinuing the introduction of feed mixture after the first predetermined period has elapsed,
(c) collecting from said second side of said membrane for a second predetermined period of time a new mixture enriched in said first component relative to said feed mixture, the second predetermined period of time beginning and elapsing before said second component attains steady-state permeation of said membrane,
characterized by using
a semi-permeable membrane sorbing the feed mixture during the first predetermined period and desorbing the new mixture enriched in said first component during the second predetermined period during collecting step (c).

2. The process of claim 1
characterized by the further step (d) of removing said feed mixture from said first side of said membrane after the first predetermined period has elapsed.

3. The process of claim 2
characterized by the further step (e) of desorbing and collecting from said second side of said membrane for another third predetermined period of time a different mixture enriched in said second component relative to said feed mixture, the third predetermined period of time being after the step of removing said feed mixture from said first side of said membrane.

4. The process of claim 3
characterized by repeatedly cycling the steps (a) to (e) to repeatedly producing a mixture selected from said new mixture and said another mixture.

5. The process of claim 2
characterized by recovering the feed mixture from said first side of said membrane with an inert fluid or a partial vacuum.

6. The process of claim 2
characterized by removing the feed mixture from said first side of said membrane by physically covering said first side with a material that is essentially impermeable to said first and second components.

7. The process of claim 3
characterized in that the another third predetermined period of time beginning after the step of removing said feed mixture from said first side of said membrane.

## Patentansprüche

1. Membrantrennverfahren, bei dem eine Membran mit einer ersten Seite und einer zweiten Seite zum Trennen von Bestandteilen in einer zugeführten fluiden Vielkomponentenmischung verwendet wird, wobei ein erster Bestandteil der Einsatzmischung die stationäre Permeation durch die Membran schneller erreicht als ein zweiter Bestandteil der Mischung, durch die Schritte;
(a) Zuführen der Einsatzmischung der ersten Seite der Membran für eine erste vorbestimmte Periode, in der die ersten und zweiten Bestandteile anfangen, sich ihrer stationären Permeation durch die Membran zu nähern,
(b) Unterbrechen des Einbringens der Einsatzmischung, nachdem die erste vorbestimmte Periode abgelaufen ist,
(c) Sammeln von der zweiten Seite der Membran für eine zweite vorbestimmte Zeitperiode einer neuen Mischung, die im Vergleich zur Einsatzmischung an erstem Bestandteil angereichert ist, wobei die zweite vorbestimmte Zeitperiode beginnt und abläuft, ehe der zweite Bestandteil die stationäre Permeation durch die Membran erreicht,
**gekennzeichnet durch**
Verwenden einer semipermeablen Membran, die während der ersten vorbestimmten Zeit die Einsatzmischung absorbiert, und Desorbieren der neuen, an erstem Bestandteil angereicherten Mischung während der zweiten vorbestimmten Periode während des Sammelschrittes (c).

2. Verfahren nach Anspruch 1,
**gekennzeichnet durch**
den weiteren Schritt (d) des Entfernens der Einsatzmischung von der ersten Seite der Membran, nachdem die erste vorbestimmte Zeitperiode abgelaufen ist.

3. Verfahren nach Anspruch 2,
**gekennzeichnet durch**
den weiteren Schritt (e) des Desorbierens und Sammelns von der zweiten Seite der Membran für eine andere, dritte vorbestimmte Zeitperiode einer unterschiedlichen Mischung, die im Vergleich zur Einsatzmischung an zweitem Bestandteil angereichert ist, wobei die dritte vorbestimmte Zeitperiode nach dem Schritt des Entfernens der Einsatzmischung von der ersten Seite der Membran beginnt.

4. Verfahren nach Anspruch 3,
**gekennzeichnet durch**
wiederholtes Durchlaufen der Schritte (a) bis (e), um wiederholt eine Mischung zu erzeugen, ausgewählt aus der neuen Mischung und der anderen Mischung.

5. Verfahren nach Anspruch 2,
**gekennzeichnet durch**
Zurückgewinnen der Einsatzmischung von der ersten Seite der Membran mit einem inerten fluiden Medium oder durch ein Teilvakuum.

6. Verfahren nach Anspruch 2,
**gekennzeichnet durch**
Entfernen der Einsatzmischung von der ersten Seite der Membran durch physikalisches Abdecken der ersten Seite mit einem Material, das für die ersten und zweiten Bestandteile im wesentlichen undurchlässig ist.

7. Verfahren nach Anspruch 3,
**dadurch gekennzeichnet,**
daß die andere, dritte vorbestimmte Zeitperiode nach dem Schritt des Entfernens der Einsatzmischung von der ersten Seite der Membran beginnt.

## Revendications

1. Procédé de séparation par membrane dans lequel une membrane ayant un premier côté et un second côté est utilisée pour séparer des composants dans un mélange d'alimentation fluide à plusieurs composants dans lequel un premier composant dudit mélange d'alimentation approche la perméation à l'état stationnaire de ladite membrane plus rapidement qu'un second composant dudit mélange, comprenant les étapes consistant à :
(a) introduire ledit mélange d'alimentation vers ledit premier côté de ladite membrane pendant une première période prédéterminée dans laquelle lesdits premier et second composants commencent à approcher de leur perméation à l'état stationnaire de ladite membrane,
(b) cesser l'introduction du mélange d'alimentaton après que la première période prédéterminée se soit écoulée,
(c) récupérer à partir dudit second côté de ladite membrane pendant une seconde période prédéterminée de temps un nouveau mélange enrichi en dit premier composant par rapport audit mélange d'alimentation, la seconde période de temps prédéterminée commençant et se terminant avant que ledit second composant n'atteigne la perméation à l'état stationnaire de ladite membrane,
caractérisé par le fait que l'on utilise
une membrane semi-perméable susceptible de sorption du mélange d'alimentation pendant la première période prédéterminée et de désorption du nouveau mélange enrichi en dit premier composant pendant la seconde période prédéterminée au cours de l'étape de récupération (c).

2. Procédé selon la revendication 1, caractérisé par l'étape supplémentaire (d) consistant à éliminer ledit mélange d'alimentation à partir dudit premier côté de ladite membrane après que la première période prédéterminée se soit écoulée.

3. Procédé selon la revendication 2, caractérisé par l'étape supplémentaire (e) de désorption et de récupération à partir dudit second côté de ladite membrane pendant une autre troisième période de temps prédéterminée d'un mélange différent enrichi en dit second composant par rapport audit mélange d'alimentation, la troisième période de temps prédéterminée ayant lieu après l'étape d'élimination dudit mélange d'alimentation à partir dudit premier côté de ladite membrane.

4. Procédé selon la revendication 3, caractérisé par le fait que l'on répète cycliquement les étapes (a) à (e) pour produire de façon répétée un mélange choisi parmi ledit nouveau mélange et ledit autre mélange.

5. Procédé selon la revendication 2, caractérisé par le fait que l'on récupère le mélange d'alimentation à partir dudit premier côté de ladite membrane à l'aide d'un fluide inerte ou d'un vide partiel.

6. Procédé selon la revendication 2, caractérisé par le fait que l'on élimine le mélange d'alimentation à partir dudit premier côté de la ladite membrane en couvrant physiquement ledit premier côté avec un matériau qui est essentiellement imperméable auxdits premier et second composants.

7. Procédé selon la revendication 3, caractérisé par le fait que l'autre troisième période prédéterminée de temps commence après l'étape d'élimination dudit mélange d'alimentation à partir dudit premier côté de ladite membrane.
